# EUROPEAN PATENT APPLICATION

(11) **EP 2 424 082 A1**
(43) Date of publication of application: **29.02.2012**
(21) Application number: 10173868.0
(22) Date of filing: 24.08.2010
(51) Int. Cl.: H02K 9/08, H02K 9/18, H02K 5/20

(54) **Electric machine with coolant intake chamber**

(71) Applicant: Alstom Technology Ltd, 5400 Baden (CH)
(72) Inventor: Srinivasan, Satish, 5242, Birr (CH); Diestel-Feddersen, Lennart, 5200, Brugg (CH); Hediger, Daniel, 5504, Othmarsingen (CH); Keller, Stefan, 8008, Zürich (CH); Schleussinger, Armin, 5242, Lupfig (CH)

(57) **Abstract**

The electric machine (1) comprises a stator (2) and a rotor (3) with cooling channels (5, 6). A cooling circuit (8) is provided for collecting a cooling fluid (9) coming from the stator and rotor cooling channels (5, 6) and conveying it through coolers (11) to then feed it into distributing chambers (13) encircling a rotor shaft (20) and located upstream of fans (14) blowing it into the stator and rotor cooling channels (5, 6). The distribution chambers (13) have a wall (17) with an opening (18) for the cooling fluid entrance and baffles (30) placed around the rotor shaft (20) for distributing the cooling fluid (9). The wall (17) defines at a zone opposite the opening (18) a spire (27) projecting inwards and/or the baffles (30) are curved with a concavity towards the opening (18).

## Description

### TECHNICAL FIELD

The present invention relates to an electric machine.

In particular reference to a cooling circuit of a large electric generator typically connected to a steam or gas turbine is hereinafter made. Naturally the invention described may also be implemented in a different electric machine, such as an electric motor.

### BACKGROUND OF THE INVENTION

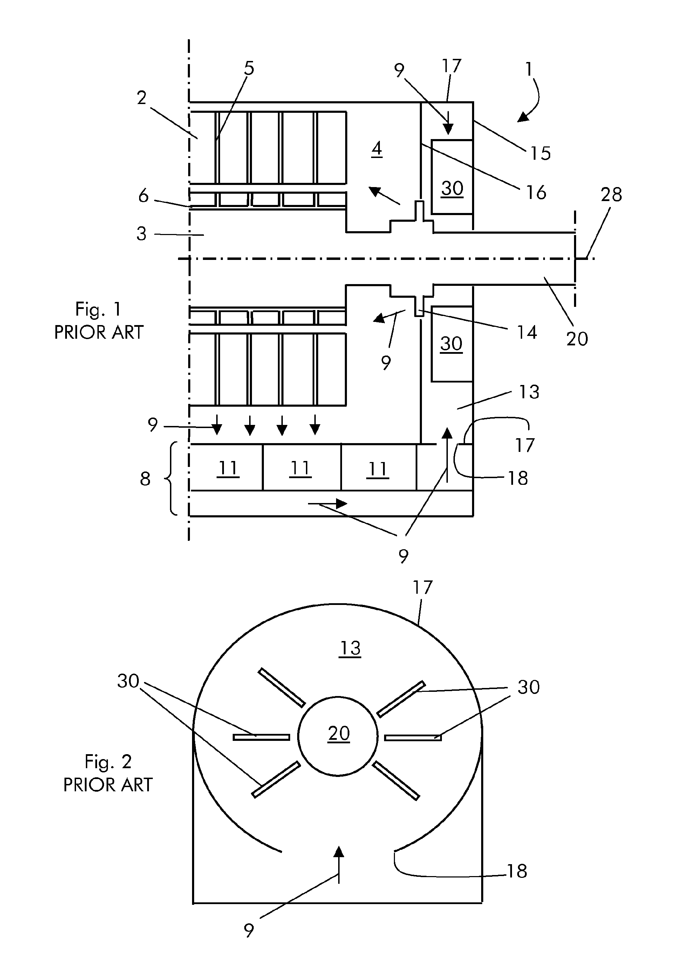

With reference to figures 1 and 2, an electric generator 1 comprises a stator 2 and a rotor 3 housed in a generator chamber 4 (the end windings and other parts are not shown).

The stator and rotor 2 and 3 are typically provided with cooling channels 5 and 6 through which a cooling fluid (typically air or hydrogen) may pass, to cool them down.

In addition, a cooling circuit 8 is also provided that collects the cooling fluid 9 coming from the generator chamber 4 and conveys it through coolers 11, wherein the cooling fluid temperature is lowered.

The coolers 11 are located either at the top, or bottom or at one or several sides or the corners of the generator casing (for example in figure 1 they are shown at the generator bottom).

From the coolers 11, the cooling fluid is conveyed into a distribution chamber 13 located upstream of a fan 14 that forces the cooling fluid again into the chamber 4 and, thus, through the cooling channels 5 and 6.

The distribution chamber 13 is defined among the axially spaced apart generator casing wall 15 and wall 16 and, in addition, circumferential wall 17 (provided with an opening 18 for the cooling fluid entrance into the distribution chamber 13) and rotor shaft 20.

In particular, between the rotor shaft 20 and wall 16 a gap is defined wherein the fan 14, spliced on the rotor shaft 20, is housed.

In order to help the cooling fluid distribute around the rotor shaft 20, baffles 30 are provided, typically extending from the wall 15.

As shown in figure 2, the wall 17 has a cylindrical shape and the baffles 30 are defined by straight plates.

During operation the cooling gas circulation proved to be quite efficient, nevertheless in some cases high pressure drop and not uniform cooling gas distribution around the shaft 20 (and fan 14) were ascertained.

Pressure drop reduces the generator efficiency and, non-uniform cooling gas distribution around the generator shaft may generate zones wherein a too small amount of cooling air is supplied, such that the lifetime of the affected components may be reduced.

### SUMMARY OF THE INVENTION

The technical aim of the present invention therefore includes providing an electric generator addressing the aforementioned problems of the known art.

Within the scope of this technical aim, an aspect of the invention is to provide an electric machine (such as an electric generator) whose cooling circuit causes small pressure drop for the cooling fluid circulating within it.

Another aspect of the invention is to provide an electric machine wherein the cooling fluid is uniformly distributed around the shaft and fan, such that non efficiently cooled areas are avoided and the lifetime and reliability of the electric machine are increased.

The technical aim, together with these and further aspects, are attained according to the invention by providing an electric machine in accordance with the accompanying claims.

### BRIEF DESCRIPTION OF THE DRAWINGS

Further characteristics and advantages of the invention will be more apparent from the description of a preferred but non-exclusive embodiment of the electric machine illustrated by way of non-limiting example in the accompanying drawings, in which:
Figure 1 is a schematic longitudinal cross section of a traditional electric generator;
Figure 2 is a schematic transversal cross section of a traditional electric generator;
Figure 3 is a schematic longitudinal cross section of an embodiment of the invention being an electric generator; and
Figure 4 is a schematic transversal cross section of an embodiment of the invention being an electric generator.

### DETAILED DESCRIPTION OF EMBODIMENTS OF THE INVENTION

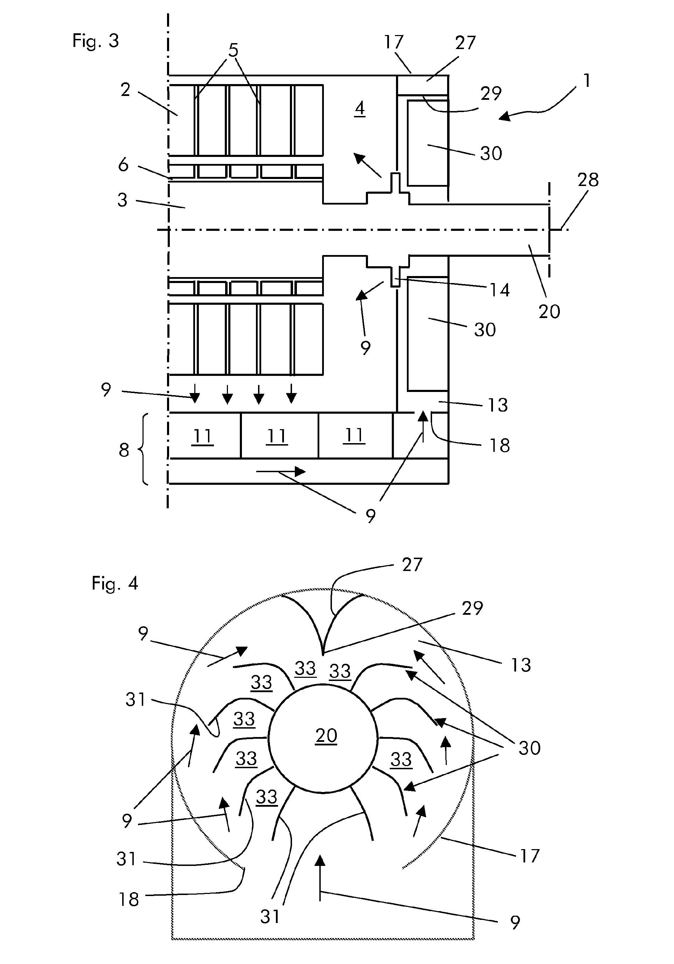

With reference to figures 3 and 4, an electric generator 1 is shown; in the following like reference numerals designate identical or corresponding parts throughout the several views.

The electric generator 1 comprises a stator 2 and a rotor 3 respectively with cooling channels 5 and 6; the stator and rotor 2, 3 are housed within a chamber 4 defined by a casing.

The electric generator 1 is provided with a cooling circuit 8 that collects a cooling fluid 9 coming from the stator and rotor cooling channels 5, 6 and conveys it through coolers 11.

In the embodiment shown the coolers are located at the bottom of the generator casing, it is anyhow clear that they may also be located at the top of the generator casing or at one or both sides or at the corners.

The cooling circuit 8 feeds the cooling fluid 9 into a distributing chamber 13 that encircles the rotor shaft 20 and is located upstream of a fan 14 blowing it back into the chamber 4 and, thus, into the stator and rotor cooling channels 5, 6.

In the enclosed figures only one generator end is shown; in different embodiments of the invention the configuration described and shown of the generator end may be provided at one end or at both ends and, in addition, in case it is provided only at one end this end may be either the driven or the non driven generator end (i.e. the end where a motor such as a steam or gas turbine is connected or not).

In the following reference to only one distribution chamber is made, in case the generator has two distribution chambers their structure is the same.

The distribution chamber 13 has a circumferential or cylindrical wall 17 with at least an opening 18 for the cooling fluid entrance.

The wall 17 defines at a zone opposite the opening 18 a spire 27 projecting inwards.

Preferably, the spire 27 extends over the whole distribution chamber length in the direction of the generator longitudinal axis 28 and correspondingly an apex 29 of the spire 27 is parallel to the generator longitudinal axis 28.

In addition, baffles 30 placed around the rotor shaft 20 for distributing the cooling fluid 9 around it are also provided.

The baffles 30 are preferably symmetrically placed (with respect to a vertical axis) around the rotor shaft 20 and have a radial end facing the rotor shaft 20 and an opposite end curved toward the opening 18, i.e. the baffles 30 are curved with a convexity towards the spire 27 and the corresponding concavity 31 towards the opening 18.

The baffles 30 substantially extend over a large part of or over the whole distribution chamber length in the direction of the generator longitudinal axis 28.

Moreover, as shown in particular in figure 4, the curvature radius of the baffles 30 closer to the opening 18 is larger than the curvature radius of the baffles closer to the spire 27 (i.e. the closer the baffles 30 to the spire 27, the more curved they are).

The operation of the electric machine in the embodiments of the invention is apparent from that described and illustrated and is substantially the following.

During operation the fan 14 rotates (it is connected to the rotor shaft 20) and forces cooling gas towards the stator 2 and rotor 3; the cooling gas enters the cooling channels 5 and 6 wherein heat is transferred from the stator 2 and rotor 3 to the cooling fluid 9, that increases its temperature.

In a typical configuration the cooling fluid 9 enters the cooling channels 6 of the rotor 3 to then pass into the cooling channels 5 of the stator 2. At the same time further cooling fluid 9 enters directly into the cooling channels 5 of the stator 2.

The cooling fluid 9 discharged from the cooling channels 5 is collected into the cooling circuit 8 where it is cooled down by coolers 11 and is then fed into the distribution chamber 13.

The cooling fluid enters the distribution chamber 13 via the opening 18.

Tests proved that, thanks to the spire 27 and baffles 30 configuration, the cooling fluid 9 is distributed within the distribution chamber 13 in a substantially uniform manner, i.e. the flow provided to the fan 14 by each guide vane 33 defined between two adjacent baffles 30 or by a baffle 30 and the adjacent spire 27, is substantially the same. In addition, the pressure drop of the cooling fluid 9 when passing through the distribution chamber 13 proved to be substantially reduced.

Naturally the features described may be independently provided from one another.

In practice the materials used and the dimensions can be chosen at will according to requirements and to the state of the art.

### REFERENCE NUMBERS

- 1: electric machine
- 2: stator
- 3: rotor
- 4: chamber
- 5: cooling channel
- 6: cooling channel
- 8: cooling circuit
- 9: cooling circuit
- 11: coolers
- 13: distribution chamber
- 14: fan
- 15: wall
- 16: wall
- 17: wall
- 18: opening
- 20: rotor shaft
- 27: spire
- 28: longitudinal axis of 1
- 29: apex of 27
- 30: baffles
- 31: concavity
- 33: guide vane

## Claims

1. Electric machine (1) comprising a stator (2) and a rotor (3) housed in a chamber (4) and provided with cooling channels (5, 6), a cooling circuit (8) being provided collecting a cooling fluid (9) coming from the stator and rotor cooling channels (5, 6) and conveying it through at least a cooler (11) to then feed it into at least a distributing chamber (13) encircling a rotor shaft (20) and located upstream of at least a fan (14) blowing it into the chamber (4), wherein the at least a distribution chamber (13) has a wall (17) with at least an opening (18) for the cooling fluid entrance and baffles (30) placed around the rotor shaft (20) for distributing the cooling fluid (9), **characterised in that** the wall (17) defines at a zone opposite the opening (18) a spire (27) projecting inwards and/or the baffles (30) are curved with a concavity towards the opening (18).

2. Electric machine (1) as claimed in claim 1, **characterised in that** the spire (27) extends over the whole distribution chamber length in the direction of the electric machine longitudinal axis (28).

3. Electric machine (1) as claimed in claim 2, **characterised in that** an apex (29) of the spire (27) is parallel to the electric machine longitudinal axis (28).

4. Electric machine (1) as claimed in claim 1, **characterised in that** the baffles (30) have a radial end facing the rotor shaft (20) and an opposite end curved toward the opening (18).

5. Electric machine (1) as claimed in claim 1, **characterised in that** the baffles (30) extend over the whole distribution chamber length in the direction of the electric machine longitudinal axis (28).

6. Electric machine (1) as claimed in claim 1, **characterised in that** the curvature radius of the baffles (30) closer to the opening (18) is larger than the curvature radius of the baffles (30) closer to the spire (27).
